# EUROPEAN PATENT APPLICATION

(11) **EP 4 507 089 A2**
(43) Date of publication of application: **12.02.2025**
(21) Application number: 24193392.8
(22) Date of filing: 07.08.2024
(51) Int. Cl.: H01M 50/204, H01M 50/503, H01M 50/583

(54) **METHODS AND SYSTEMS FOR DECOUPLING BATTERIES IN THE EVENT OF A THERMAL RUNAWAY**

(30) Priority: 11.08.2023 IN 202311053839; 01.08.2024 US 202418791496
(71) Applicant: Schneider Electric IT Corporation, Foxboro, MA 02035 (US)
(72) Inventor: VIJAYAN, Santhosh Kumar, 560-067 Bangalore (IN); GHOSH CHOWDHURY, Sumandra, 560-067 Bangalore (IN); BAMMANNI, Rajeev, 560-067 Bangalore (IN); NARASAIAH, Mohan, 560-067 Bangalore (IN)
(74) Representative: Plasseraud IP

(57) **Abstract**

A system includes a first battery, a second battery, and a battery connector coupling the first battery to the second battery. The battery connector includes a first portion and a second portion. The second portion is narrower than the first portion. The second portion is configured to decouple the first battery from the second battery when a current above a threshold current passes through the second portion.

## Description

### BACKGROUND OF THE DISCLOSURE

### Field of Disclosure

This invention relates generally to batteries, preferably lithium ion batteries, and more particularly to a flame arresting system that is configured to inhibit propagation of flame emanating from a battery pack, preferably from a lithium-ion battery pack.

### Discussion of Related Art

Battery packs, such as lithium-ion battery packs, may be used in various applications, including uninterruptible power supply (UPS) applications. The battery packs may provide backup power to the UPS. Lithium-ion cells are superior to alternative battery power sources due to their high energy density, ability to withstand cycling, low self-discharge thereby providing a longer backup time and prolonged use and storage life.

A battery pack may include any combination of a mechanical enclosure, lithium-ion cell modules, a battery management system (BMS), a printed circuit board (PCB), and/or requisite interconnections to provide both power and communications.

An enclosure having an acceptable ingress progression rating may be used when forced or natural air cooling is devised to keep the cell temperatures and electronic components under the prescribed safe thermal limit.

Due to the higher energy density, thermal runaway is a concern with existing lithium-ion batteries. For example, an acceptable regulatory standard requires multiple levels of protection enabled by both software and electrical hardware on the BMS to prevent or otherwise limit thermal runaway.

A system with batteries may undergo a thermal runaway event. A thermal runaway event may include a short circuit propagating through paralleled battery cells, which can create a fire.

### BRIEF DESCRIPTION OF THE DRAWINGS

Various aspects of at least one embodiment are discussed below with reference to the accompanying figures, which are not intended to be drawn to scale. The figures are included to provide an illustration and a further understanding of the various aspects and embodiments, and are incorporated in and constitute a part of this specification, but are not intended as a definition of the limits of any particular embodiment. The drawings, together with the remainder of the specification, serve to explain principles and operations of the described and claimed aspects and embodiments. In the figures, each identical or nearly identical component that is illustrated in various figures is represented by a like numeral. For purposes of clarity, not every component may be labeled in every figure. In the figures:
FIG. 1 is a perspective view of a battery pack of an embodiment of the present disclosure;
FIG. 2 is a perspective view of one of several cell modules provided in the battery pack according to an embodiment of the present disclosure;
FIG. 3 is a perspective view of a portion of the cell module showing battery cells connected to one another by a battery connector of an embodiment of the present disclosure;
FIG. 4 is a perspective view of the battery pack of the present disclosure, with a top or cover removed to reveal the cell modules and other components of the battery pack;
FIG. 5 is a perspective view of the battery connector according to an embodiment of the present disclosure;
FIG. 6 is a perspective view of a portion of the cell module showing battery cells connected to one another at one end by one battery connector and selectively connected to one another by two battery connectors according to an embodiment of the present disclosure;
FIG. 7 is a perspective view of a portion of the battery connector showing a narrow portion of the battery connector according to an embodiment of the present disclosure;
FIG. 8 is a perspective view of the battery connector showing the narrow portion of the battery connector removed because of an event according to an embodiment of the present disclosure;
FIG. 9 is a plan view of the battery connector according to an embodiment of the present disclosure;
FIG. 10 is an enlarged view of a portion of the battery connector according to an embodiment of the present disclosure;
FIG. 11 is a perspective view of a portion of the battery pack showing a battery connector of another embodiment of the present disclosure;
FIG. 12 is a perspective view of the battery connector shown in FIG. 11;
FIG. 13 is a plan view of the battery pack with the top or cover removed according to an embodiment of the present disclosure;
FIG. 14 is an enlarged perspective showing a connection between the battery connector and a printed circuit board of the battery pack according to an embodiment of the present disclosure;
FIG. 15 is a perspective view of a portion of the battery pack showing polarity of battery cells of the cell module according to an embodiment of the present disclosure; and
FIG. 16 is another perspective view of a portion of the battery pack showing polarity of battery cells of the cell module according to an embodiment of the present disclosure.

### DETAILED DESCRIPTION OF THE DISCLOSURE

This disclosure is not limited in its application to the details of construction and the arrangement of components set forth in the following descriptions or illustrated by the drawings. The disclosure is capable of other embodiments and of being practiced or of being carried out in various ways. Also, the phraseology and terminology used herein is for description purposes and should not be regarded as limiting. The use of "including," "comprising," "having," "containing," "involving," and variations herein, are meant to be open-ended, i.e., "including but not limited to."

Various embodiments in the present disclosure mitigate risks due to a thermal runaway event. For example, various embodiments may mitigate the risk of fire propagating from a device containing the batteries. Various embodiments may mitigate the risk of explosions in the device containing the batteries. A thermal runaway event may include an electrochemical cell increasing its temperature through self-heating in an uncontrolled fashion. The thermal runaway progresses when the generation of heat from the cell is a higher rate than the heat it can dissipate. This may lead to a fire, explosion, and/or gas emissions.

During a thermal runaway event, there is a risk of a flame propagating outside the unit. It may be desirable to contain the flame within the equipment and at the same time prevent the flame from propagating to other cells which can further trigger an incident. In some circumstances, an in-rush current from the failed cell may transfer its energy into parallel connected cells.

A thermal runaway event may include an electrochemical cell increasing its temperature through self-heating in an uncontrolled fashion. Thermal runaway progresses when the cell generates heat at a higher rate than the heat the cell can dissipate. This thermal runaway may lead to a fire, explosion, and/or gas emissions.

The in-rush current from the failed cell may transfer its energy into parallel connected cells. Specifically, during a thermal runaway event, an internal short circuit may be triggered in the abused cell (e.g., a punctured cell). The short circuit may lead to an in-rush current entering into the parallel connected cell, which would cause the parallel cells to fail. This would further initiate a cascading event.

In some embodiments, a system includes batteries connected to one another with a battery connector. In a certain embodiment, the battery connector includes two portions, a first portion and a second portion. The second portion is narrower than the first portion and is configured to de-couple the batteries from each other when a high current passes through the second portion.

In some embodiments, the battery connector is configured to blow open when a sufficient current (above a predetermined amount) passes through the second portion, thereby isolating the affected battery from the other batteries connected in parallel.

In some embodiments, protection against in-rush current may be provided by a fusible cell connector that is configured to prevent short circuit in-rush current into the parallel connected cell.

In some embodiments, the fusible cell connector may be made of copper with nickel plating, and may form a connection between battery cells to enable series and parallel functionality.

In some embodiments the fusible cell connector may be designed to fuse such that the cells are isolated at an appropriate time if the in-rush current is higher than the maximum allowable cell current. The cell connector may fuse at a fuse portion, which may be narrower than other portions.

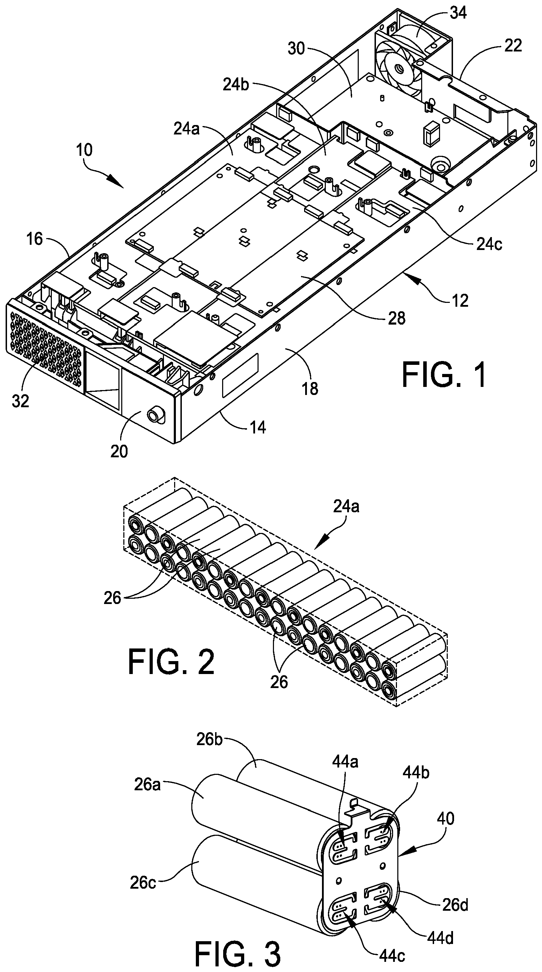

Referring now to the drawings, and more particularly to FIG. 1, an exemplary battery pack is generally indicated at 10. In the shown embodiment, the battery pack 10 includes an enclosure, generally indicated at 12, which is configured to support components of the battery pack. The enclosure 12 is a generally rectangular-cuboid structure that is shaped and sized to be inserted within a UPS to provide battery power to the UPS. In one embodiment, the enclosure 12 includes a bottom 14, two relatively long sides 16, 18, two relatively short ends 20, 22 and a top or cover, which is removed and not shown for illustration purposes. The shape and size of the enclosure 12 can be tailored to the intended use of the battery pack 10. The enclosure 12 is preferably fabricated from a rigid material having high stiffness and strength. In some embodiments, the enclosure 12 can be fabricated from steel or aluminum, or a suitable lightweight, rigid material, such as carbon fiber-reinforced plastic (CFRP) or glass fiber reinforced plastic (GFRP).

The battery pack 10 further includes several cell modules, indicated at 24a, 24b, 24c, which are supported by the enclosure 12. The cell modules 24a, 24b, 24c may be referred to herein as a heat-source component. In the shown embodiment, the battery pack 10 includes three cell modules 24a, 24b, 24c provided in the enclosure 12; however, it should be understood that any number of cell modules can be provided depending on the size, shape and orientation of the battery pack. FIG. 2 illustrates an exemplary cell module, e.g., cell module 24a, which includes several battery cells, each indicated at 26, that extend crosswise with respect to a length of the cell module. Specifically, the battery cells 26 are arranged in pairs, with one pair of battery cells stacked vertically on one another having positive ends facing one side of the cell module 24a and an adjacent pair of battery cells having negative ends facing the same side of the cell module. in one example, the polarities of the pairs of battery cells 26 alternate along the length of the cell module 24a. It should be noted that the battery cells of the cell modules can be configured in any suitable manner. As will be described in greater detail below, suitable battery connectors (not shown) are provided to connect the battery cells 24a, 24b, 24c to one another and to other components of the battery pack 10.

The battery pack 10 further includes a battery management system (BMS), indicated at 28, a printed circuit board (PCB) including electronic components, indicated at 30, and requisite interconnections to provide both power and communications within the battery pack. The BMS 28 is an electronic system that manages the cell modules 24a, 24b, 24c of the battery pack 10 to protect the cell modules, monitor the state of the battery pack, calculate secondary data, report data, and balance cell modules. For example, the BMS 28 may be configured to monitor voltage, temperature, current, and state of balance of the battery cells 26 of the cell modules 24a, 24b, 24c. The PCB 30 is a set of analog signal conditioning circuitry that provides an interface. For example, the PCB 30 may be used as an interface with sensors associated with the cell modules 24a, 24b, 24c. In one embodiment, the PCB 30 may embody a printed circuit board mounted within an interior of the enclosure on top of the cell modules 24a, 24b, 24c.

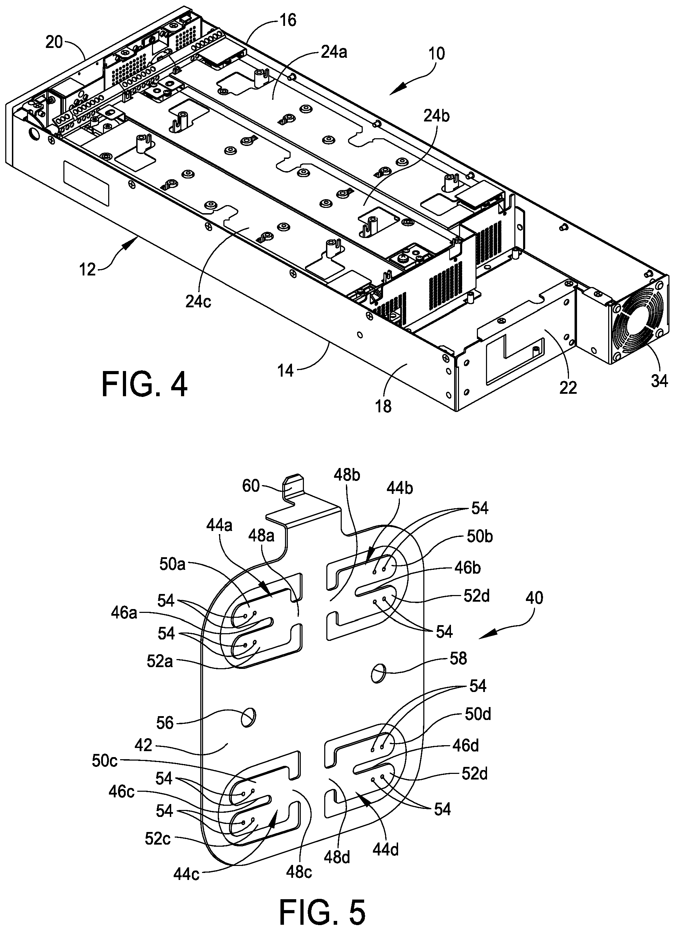

Referring additionally to FIG. 4, the enclosure 12 of the battery pack 10 further is designed to permit air to flow through the enclosure to cool the battery cell modules 24a, 24b, 24c. In one embodiment, one end of the enclosure 12, e.g., end 20, includes a vent 32 formed therein. The vent 32, which is positioned adjacent to side 16 on the end 20 of the enclosure 12, may include a pattern of openings that enable air to enter into the interior of the enclosure. The size and number of openings can be selected based on the desired airflow through the interior of the enclosure 12. The battery pack 10 further includes a fan module 34 provided on the opposite end, e.g., end 20, of the enclosure 12. The provision of the vent 32 and the fan module 34 may be referred to herein as an exhaust, which is associated with the enclosure 12 of the battery pack 10, to enable air to flow through the enclosure. In the shown embodiment, the fan module 34 is configured to draw air into the interior of the enclosure through the vent 32. The fan module 34 includes a generally rectangular-cuboid casing or housing that is configured to support the components of the fan module. In one embodiment, the housing of the fan module 34 includes an axial fan having a motor supported by a support structure, and a plurality of fan blades that extend from the motor. The axial fan can be configured to rotate in one direction, but can be configured to be reversible to rotate in clockwise and counterclockwise directions. The motor can include a several speed motor or a variable speed motor to vary a rate of rotation of the axial fan. The fan module 34 further includes a protective cover at the end of the casing to protect an operator from the axial fan during operation while enabling air to flow through the fan module.

Referring to FIG. 3, four battery cells, indicated at 26a, 26b, 26c, 26d, of one of the cell module are connected to one another by a battery connector, generally indicated at 40, of embodiments of the present disclosure. The battery connector 40 functions as a fuse to provide overcurrent protection of the cell module. As will be described in greater detail below, the battery connector 40 includes a narrow width portion that is configured to de-couple the battery cells 26a, 26b, 26c, 26d from each other when a high current above a predetermined threshold passes through the narrow portion. The time and current operating characteristics of the battery connector 40 can be selected to provide sufficient protection depending on its intended use.

Referring to FIG. 5, in one embodiment of the present disclosure, the battery connector 40 includes a planar body 42 fabricated from electrically connective material. In one embodiment, the planar body 42 of the battery connector 40 is fabricated copper having a nickel plating. Other suitable conductive materials may be selected based on functionality and performance. As shown, the planar body 42 is generally square- or rectangular-shaped in construction having rounded corners.

The planar body 42 is configured with four tab structures, generally indicated at 44a, 44b, 44c, 44d, which are formed within an interior of the planar body. Each tab structure 44a, 44b, 44c, 44d includes a respective first portion 46a, 46b, 46c, 46d configured to engage an end of the battery cell 26 and a respective second portion 48a, 48b, 48c, 48d, which is narrower than the first portion. For each tab structure 44a, 44b, 44c, 44d, there is an open space around the first portion 46a, 46b, 46c, 46d and the second portion 48a, 48b, 48c, 48d, with the second portion being integrally formed from the planar body 42. The tab structures 44a, 44b, 44c, 44d are symmetrically arranged within the planar body 42, with tab structures 44a, 44b and tab structures 44c, 44d extending in opposite directions, and tab structures 44a, 44c and tab structures 44b, 44d extending in the same directions. The arrangement is such that the second portions 48a, 48b of tab structures 44a, 44b, respectively, are configured to decouple a first battery cell 26 from a second battery cell 26 when a current above a threshold current passes through one of the second portions 48a, 48b, and the second portions 48c, 48d of tab structures 44c, 44d, respectively, are configured to decouple a third battery cell 26 from a fourth battery cell 26 when a current above a threshold current passes through one of the second portions 48c, 48d.

Each first portion 46a, 46b, 46c, 46d of tab structures 44a, 44b, 44c, 44d respectively includes a first tab portion 50a, 50b, 50c, 50d and a second tab portion 52a, 52b, 52c, 52d. Each tab portion includes two positioning features embodying a first dimple and a second dimple, with each dimple being indicated at 54. Although referred to herein as a dimple, each dimple 54 can be formed in a projection. The positioning features are configured to engage the end of the battery cell 26 to connect the battery cell to the battery connector 40. In some embodiments, the dimples 54 of the positioning features can be coated or plated with a conductive material.

For each tab structure 44a, 44b, 44c, 44d, the end of a battery cell 26 engages the four dimples 54, two dimples associated with the first tab portion 50a, 50b, 50c, 50d and two dimples associated with the second tab portion 52a, 52b, 52c, 52d to position and engage the end of the battery cell. The opposite end of the battery cell 26 engages four dimples 54, two dimples associated with the first tab portion 50a, 50b, 50c, 50d and two dimples associated with the second tab portion 52a, 52b, 52c, 52d to position and engage the opposite end of the battery cell.

Thus, tab structure 44a is configured to engage an end of a first battery cell 26, tab structure 44b is configured to engage an end of a second battery cell 26, tab structure 44c is configured to engage an end of a third battery cell 26, and tab structure 44d is configured to engage an end of a fourth battery cell 26. Each tab structure 44a, 44b, 44c, 44d includes the narrower second portion 48a, 48b, 48c, 48d, respectively, which is configured to decouple the second battery cell 26 from the first battery cell 26 when a current above a threshold current passes through the narrower second portion.

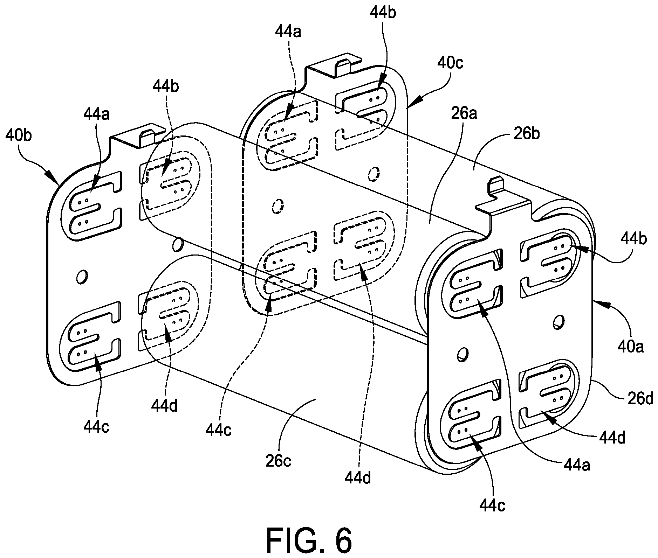

The arrangement is such that each battery connector engages the ends of four battery cells. For example, as shown above in FIG. 3, the battery connector 40 is configured to engage ends of four battery cells 26a, 26b, 26c, 26d. Referring to FIG. 6, the polarity of the battery cells can be configured so that the positive end of the first battery cell 26a engages the first tab structure 44a, the negative end of the second battery cell 26b engages the second tab structure 44b, the positive end of the third battery cell 26c engages the third tab structure 44c, and the negative end of the fourth battery cell 26d engages the fourth tab structure 44d of battery connector 40a. With the shown embodiment, the negative end of the first battery cell 26a and the negative end of the third battery cell 26c engage the second tab structure 44b and the fourth tab structure 44d, respectively, of battery connector 40b, and the positive end of the second battery cell 26b and the positive end of the fourth battery cell 26d engage the first tab structure 44a and the third tab structure 44c, respectively, of battery connector 40c. Any number of configurations can be provided depending on the intended use of the battery cell module within the battery pack.

Referring back to FIG. 5, the battery connector 40 further includes two positioning openings 56, 58 formed in the planar body 42 of the battery connector. The positioning openings 56, 58 provide a known location to position the cell module, e.g., cell module 24a, with respect to an adjacent cell module, e.g., cell module 24b, and with respect to the enclosure 12 of the battery pack 10. Although two positioning openings 56, 58 are illustrated, any number of positioning openings can be provided. Also, the size and shape of the positioning opening 56, 58 can be tailored to a particular intended use.

The battery connector 40 further includes a connection tab 60 provided at a top of the planar body 42 of the battery connector. Specifically, the connection tab 60 extends horizontally from the planar body 42 of the battery connector 40 and is bent vertically so that the end of the connection tab 60 is co-planar to the planar body. The purpose of the connection tab 60 is to connect the battery connector 40 to a printed circuit board, which will be described in greater detail below.

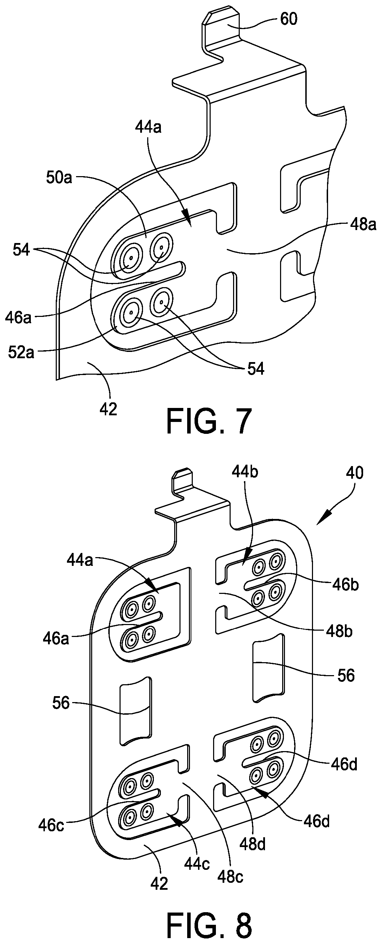

Referring to FIGS. 7 and 8, during operation, and under normal conditions, the battery connector 40 is subject to a nominal current, e.g., 40-50 Amps. Each narrow second portion of the narrow second portions 48a, 48b, 48c, 48d of the battery connector 40 have a sufficient width and thickness to handle the current, with the narrow second portion being designed to accommodate selective currents. As described above, during a thermal runaway event, the battery cell 26 or multiple battery cells increase temperature at a higher rate than the heat the battery cell can dissipate. The resulting in-rush current from the failed battery cell may transfer its energy into parallel connected cells. The current can spike, but each narrow second portion of the narrow second portions 48a, 48b, 48c, 48d is designed to fail at a preselected (threshold) current, e.g., 120 Amps, to isolate the failed battery cell from the remaining battery cells. FIG. 7 illustrates the narrow second portion 48a intact to enable electrical connection between the battery cell 26 and the first portion 46a of the battery connector 40. FIG. 8 illustrates the narrow second portion 48a in an open position to disconnect the first portion 46a of the battery connector 40 from the battery cell as a result of a thermal runaway event. In the open position, the battery cell connected to the first portion is isolated from the other battery cells connected to the battery connector 40.

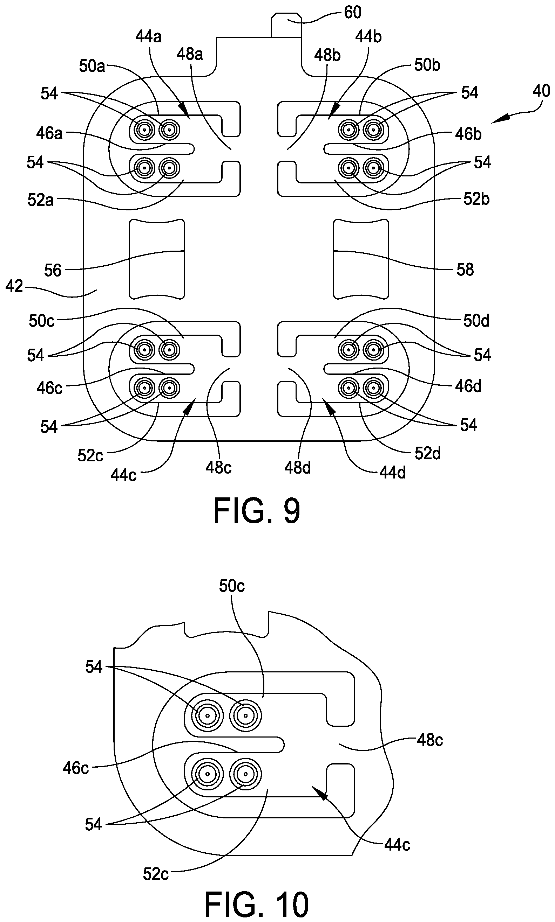

Referring to FIGS. 9 and 10, in one embodiment, each tab structure 44a, 44b, 44c, 44d is sized and shaped to connect four battery cells 26 to the battery connector 40. In the described embodiment, each tab structure 44a, 44b, 44c, 44d includes the first portion 46a, 46b, 46c, 46d, respectively. Each first portion of the first portions 46a, 46b, 46c, 46d has the first tab portion 50a, 50b, 50c, 50d and the second tab portion 52a, 52b, 52c, 52d, with each tab portion having a width of 2.88 millimeter (mm) and spaced from one another 1.00 mm. The overall width of each first portion of the first portions 46a, 46b, 46c, 46d, including the first tab portion 50a, 50b, 50c, 50d and the second tab portion 52a, 52b, 52c, 52d where joined together, is 6.76 mm. Each first tab portion of the first tab portions 50a, 50b, 50c, 50d and each tab portion of the second tab portions 52a, 52b, 52c, 52d includes two dimples 54 spaced apart from one another 2.50 mm on a common tab portion and spaced apart 3.85 mm with respect to the two dimples provided on its adjacent tab portion. In the shown embodiment, each narrow portion of the narrow second portions 48a, 48b, 48c, 48d has a width of 2.40 mm. In one embodiment, the battery connector 40 has a thickness of 0.25 mm. The widths and thicknesses of the narrow second portions 48a, 48b, 48c, 48d can be selected based on a desired threshold of current in which the narrow second portion should fail.

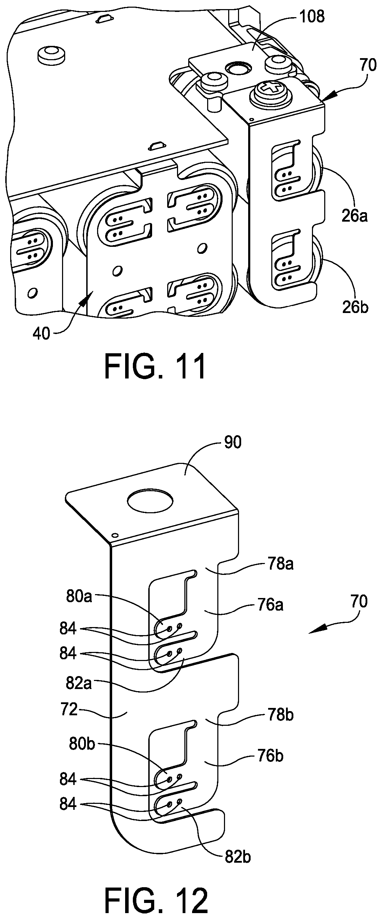

Referring to FIGS. 11 and 12, an end portion of the battery pack 10 may include a battery connector, generally indicated at 70, of another embodiment of the present disclosure to connect two battery cells 26 that are connected in parallel. As with battery connector 40, the battery connector 70 functions as a fuse to provide overcurrent protection of the cell module. The battery connector 70 includes a planar body 72 fabricated from electrically connective material. As shown, the planar body 72 is generally a rectangular-shaped structure in construction. The planar body 72 of the battery connector 70 is configured with two tab structures, generally indicated at 74a, 74b, which are formed in the planar body. Each tab structure 74a, 74b, includes a respective first portion 76a, 76b configured to engage an end of a battery cell 26 and a second portion 78a, 78b, which is narrower than the first portion. For each tab structure 74a, 74b, there is an open space around the first portion 76a, 76b and the second portion 78a, 78b, with the second portion being integrally formed from the planar body 72. As best shown in FIG. 12, the tab structures 74a, 74b, are positioned vertically with respect to one another, with the tab structures extending in the same direction. The arrangement is such that the second portions 78a, 78b of the tab structures ____a, ____b, respectively, are configured to decouple a first battery cell 26 from a second battery cell 26 when a current above a threshold current passes through the second portion.

Each first portion 76a, 76b of tab structures 74a, 74b respectively includes a first tab portion 80a, 80b and a second tab portion 82a, 82b. Each tab portion includes two positioning features embodying a first dimple and a second dimple, with each dimple being indicated at 84. The positioning features are configured to engage the end of the battery cell 26 to connect the battery cell to the battery connector 70. For each tab structure 74a, 74b, the end of a battery cell 26 engages the four dimples 84, two dimples associate with the first tab portion 80a, 80b and two dimples associated with the second tab portion 82a, 82b to position and engage the battery cell 26. The opposite end of the battery cell 26 engages four dimples 84, two dimples associated with the first tab portion 82a, 80b and two dimples associated with the second tab portion to position and engage the opposite end of the battery cell.

Thus, tab structure 74a is configured to engage an end of a first battery cell 26 and tab structure 74b is configured to engage an end of a second battery cell 26. Each tab structure 74a, 74b includes the narrower second portion 78a, 78b, respectively, which is configured to decouple the second battery cell 26 from the first battery cell 26 when a current above a threshold current passes through the narrower second portion.

The arrangement is such that each battery connector 70 engages the ends of two battery cells 26. As shown in FIG. 11, the battery connector 70 is configured to engage ends of two battery cells 26. The polarity of the battery cells 26 can be configured so that the positive ends of the first battery cell and the second battery cell engage the first tab structure 74a and the second tab structure 74b, respectively. With the shown embodiment, the negative ends of the first battery cell 26 and the second battery cell 26 engage the first tab structure 74a and the second tab structure 74b of the battery connector 70 at the opposite ends of the battery cells. Any number of configurations can be provided depending on the intended use of the battery cell module within the battery pack.

The battery connector 70 further includes a connection tab 90 provided at a top of the planar body 72 of the battery connector. As shown in FIG. 11, the connection tab 90 extends horizontally from the planar body 72 of the battery connector 70 and is configured to be secured to the enclosure 12 of the battery pack 10. The purpose of the connection tab 90 is to connect the battery connector to a printed circuit board and/or a terminal.

During operation, and under normal conditions, the battery connector 70 is subject to a nominal current, e.g., 40-50 Amps. The narrow second portions 78a, 78b of the battery connector 70 have a sufficient width and thickness to handle the current, with the narrow second portions being designed to accommodate selective currents. During a thermal runaway event that causes a current spike, the narrow second portion 78a, 78b is designed to fail at a preselected (threshold) current, e.g., 120 Amps, to isolate the failed battery cell from the remaining battery cells.

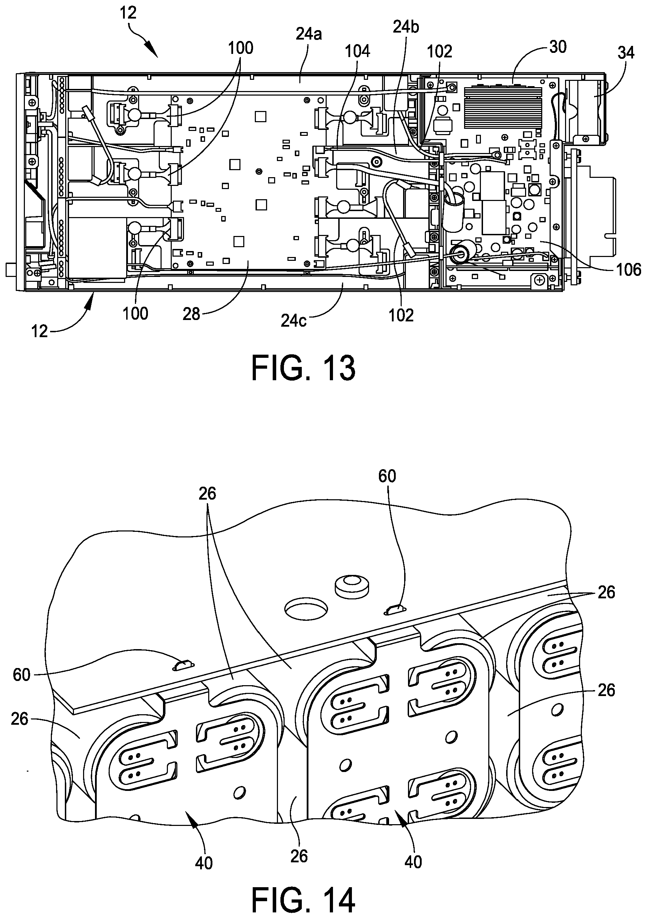

Referring to FIG. 13, the cell modules 24a, 24b, 24c of the battery pack 10 are connected to the PCB 30 by several connectors, each indicated at 100. Each cell module 24a, 24b, 24c is connected to the PCB 30 by a dedicated connector 100. The cell modules 24a, 24b, 24c are connected to each other by several cables, each indicated at 102. The AFE is connected to the BMS by cable 104.

Referring to FIG. 14, the battery connector 40 is connected to a printed circuit board 106 associated with the PCB 30 by the connection tab 60 provided at the top of the battery connector 40. The connection tab 90 of the battery connector 70 is configured to be secured to the printed circuit board 106 in a similar way. In one embodiment, the connection tab 60 is soldered to the printed circuit board 106, which can be configured to sense voltage of the battery cells 26 coupled to the battery connector 40. Passive cell balancing uses a resistor to dissipate the energy of the battery cell 26 with the highest voltage in the series. This method monitors individual cell voltage and makes balancing decisions based on cell voltage delta, bleeding off excessive charge from the higher cell voltage to match the lower cell voltage level. It accomplishes this by using a relatively low current through a switch and bleed resistor in parallel with each battery cell 26.

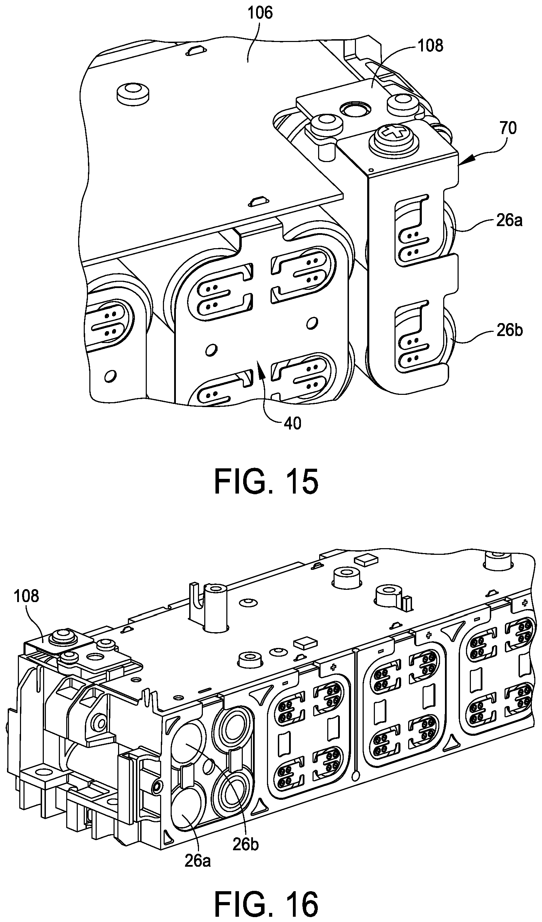

Referring to FIGS. 15 and 16, the cell connector polarities are shown. FIG. 15 shows the ends of battery cells 26a, 26b as being positive at the terminal connection. Thus, the shown terminal, indicated at 108, is a positive terminal. FIG. 16 shows the opposite ends of battery cells 26a, 26b as being negative, with the battery connector removed to show the ends of the battery cells. Adjacent battery cells 26c, 26d are reversed, with the polarities of battery cells of the cell module alternating along a length of the cell module.

Embodiments of the present disclosure may further be directed to a method of decoupling a battery cell, e.g., battery cell 26a shown in FIG. 3, from an adjacent battery cell, e.g., battery cell 26b in FIG. 3, within the cell module, e.g., cell module 24a, of the battery pack 10. In one embodiment, the method includes connecting the first battery 26a to the second battery 26b with the battery connector 40 (or battery connector 70), positioning the first battery 26a and the second battery 26b of the cell module 24a within the enclosure 12 of the battery pack 10, and during operation of the battery pack 10, in the event of a thermal runaway event, decoupling the first battery 26a from the second battery 26b, the battery connector 40 (or battery connector 70) being configured to disconnect the first battery 26a from the second battery 26b with the battery connector 40 (or battery connector 70) when a current above a threshold occurs.

The method further may include positioning the first battery 26a to a tab, e.g., tab structure 44a, of the battery connector 40 with at least one positioning feature, e.g., dimple 54, configured to engage the end of the first battery 26a. The method further may include connecting the battery connector 40 to a printed circuit board, e.g., printed circuit board 106 of PCB 30.

Various controllers may execute various operations discussed above with respect to the BMS 28 and the PCB 30. Using data stored in associated memory and/or storage, the controller also executes one or more instructions stored on one or more non-transitory computer-readable media, which the controller may include and/or be coupled to, that may result in manipulated data. In some examples, the controller may include one or more processors or other types of controllers. In one example, the controller is or includes at least one processor. In another example, the controller performs at least a portion of the operations discussed above using an application-specific integrated circuit tailored to perform particular operations in addition to, or in lieu of, a general-purpose processor. As illustrated by these examples, examples in accordance with the present disclosure may perform the operations described herein using many specific combinations of hardware and software and the disclosure is not limited to any particular combination of hardware and software components. Examples of the disclosure may include a computer-program product configured to execute methods, processes, and/or operations discussed above. The computer-program product may be, or include, one or more controllers and/or processors configured to execute instructions to perform methods, processes, and/or operations discussed above.

Further examples are defined in the following clauses.
Clause 1. A system, comprising:
   a first battery;
   a second battery; and
   a battery connector coupling the first battery to the second battery, wherein the battery connector includes
   a first portion, and
   a second portion, the second portion being narrower than the first portion, and the second portion being configured to decouple the first battery from the second battery when a current above a threshold current passes through the second portion.
Clause 2. The system of clause 1, wherein the first portion includes at least one tab having at least one positioning feature configured to engage an end of the first battery.
Clause 3. The system of clause 2, wherein the at least one positioning feature includes a first dimple and a second dimple.
Clause 4. The system of clause 1, wherein the first portion includes a first tab having at least one first positioning feature configured to engage an end of the first battery and a second tab having at least one second positioning feature configured to engage the end of the first battery.
Clause 5. The system of clause 4, wherein the at least one first positioning feature includes a first dimple and a second dimple and the at least one second positioning feature includes a third dimple and a fourth dimple.
Clause 6. The system of clause 1, wherein the first portion of the battery connector is configured to engage an end of the first battery.
Clause 7. The system of clause 6, wherein the battery connector further includes a third portion and a fourth portion, the third portion being configured to engage an end of the second battery.
Clause 8. The system of clause 7, wherein the fourth portion is narrower than the third portion, and the fourth portion is configured to decouple the second battery from the first battery when the current above the threshold current passes through the fourth portion.
Clause 9. The system of clause 8, wherein the first portion includes a first tab having at least one first positioning feature configured to engage an end of the first battery and a second tab having at least one second positioning feature configured to engage the end of the first battery, and the third portion includes a third tab having at least one third positioning feature configured to engage an end of the second battery and a fourth tab having at least one fourth positioning feature to engage the end of the second battery.
Clause 10. The system of clause 9, wherein the at least one first positioning feature includes a first dimple and a second dimple, the at least one second positioning feature includes a third dimple and a fourth dimple, the at least one third positioning feature includes a fifth dimple and a sixth dimple, and the at least one fourth positioning feature includes a seventh dimple and an eighth dimple.
Clause 11. The system of clause 8, wherein the battery connector further includes
   a fifth portion and a sixth portion, the fifth portion being configured to engage an end of a third battery, and
   a seventh portion and an eighth portion, the eighth portion being configured to engage an end of a fourth battery.
Clause 12. The system of clause 11, wherein
   the sixth portion is narrower than the fifth portion, and the sixth portion is configured to decouple the third battery from the fourth battery when the current above the threshold current passes through the sixth portion, and
   the eighth portion is narrower than the seventh portion, and the eighth portion is configured to decouple the fourth battery from the third battery when the current above the threshold current passes through the eighth portion.
Clause 13. The system of clause 12, wherein
   the first portion includes a first tab having at least one first positioning feature configured to engage an end of the first battery and a second tab having at least one second positioning feature configured to engage the end of the first battery,
   the third portion includes a third tab having at least one third positioning feature configured to engage an end of the second battery and a fourth tab having at least one fourth positioning feature to engage the end of the second battery,
   the fifth portion includes a fifth tab having at least one fifth positioning feature configured to engage an end of the third battery and a sixth tab having at least one sixth positioning feature configured to engage the end of the third battery, and
   the seventh portion includes a seventh tab having at least one seventh positioning feature configured to engage an end of the fourth battery and an eighth tab having at least one eighth positioning feature to engage the end of the fourth battery.
Clause 14. The system of clause 13, wherein each positioning feature includes at least one dimple.
Clause 15. The system of clause 1, wherein the battery connector further includes at least one positioning opening formed therein.
Clause 16. The system of clause 1, wherein the battery connector further includes a tab configured to connect the battery connector to a printed circuit board.
Clause 17. The system of clause 1, wherein the battery connector is fabricated from copper plated with nickel or a nickel alloy.
Clause 18. The system of clause 1, wherein a width of the second portion is selected based on the threshold of current upon which the second portion decouples the first battery.
Clause 19. A method, comprising:
   connecting a first battery to a second battery with a battery connector;
   positioning the first battery and the second battery within a battery pack; and
   during operation of the battery pack, in the event of a thermal runaway event, decoupling the first battery from the second battery, the battery connector being configured to disconnect the first battery from the second battery with the battery connector when a current above a threshold occurs.
Clause 20. The method of clause 19, wherein the battery connector includes a first portion and a second portion, the second portion being narrower than the first portion, and the second portion being configured to decouple the first battery from the second battery when the current above the threshold current passes through the second portion.
Clause 21. The method of clause 20, further comprising positioning the first battery to a tab of the battery connector with at least one positioning feature configured to engage an end of the first battery.
Clause 22. The method of clause 21, wherein the at least one positioning feature includes a first dimple and a second dimple.
Clause 23. The method of clause 20, wherein the first portion of the battery connector is configured to engage an end of the first battery, and wherein the battery connector further includes a third portion and a fourth portion, the third portion being configured to engage an end of the second battery.
Clause 24. The method of clause 23, wherein the fourth portion is narrower than the third portion, and the fourth portion is configured to decouple the second battery from the first battery when the current above the threshold current passes through the fourth portion.
Clause 25. The method of clause 19, further comprising connecting the battery connector to a printed circuit board.

Having thus described several aspects of at least one embodiment, it is to be appreciated various alterations, modifications, and improvements will readily occur to those skilled in the art. Such alterations, modifications, and improvements are intended to be part of this disclosure and are intended to be within the scope of the disclosure. Accordingly, the foregoing description and drawings are by way of example only.

## Claims

1. A method, comprising:
connecting a first battery to a second battery with a battery connector;
positioning the first battery and the second battery within a battery pack; and
during operation of the battery pack, in the event of a thermal runaway event, decoupling the first battery from the second battery, the battery connector being configured to disconnect the first battery from the second battery with the battery connector when a current above a threshold occurs.

2. The method of claim 1, further comprising positioning the first battery to a tab of the battery connector with at least one positioning feature configured to engage an end of the first battery.

3. The method of claim 1 or 2, further comprising connecting the battery connector to a printed circuit board.

4. The method of any of the above claims for operating the battery pack in a UPS.

5. A system, comprising:
a first battery;
a second battery; and
a battery connector coupling the first battery to the second battery, wherein the battery connector includes
a first portion, and
a second portion, the second portion being narrower than the first portion, and the second portion being configured to decouple the first battery from the second battery when a current above a threshold current passes through the second portion.

6. The system of claim 5, wherein the first portion includes at least one tab having at least one positioning feature configured to engage an end of the first battery or wherein the first portion includes a first tab having at least one first positioning feature configured to engage an end of the first battery and a second tab having at least one second positioning feature configured to engage the end of the first battery.

7. The system of claim 6, wherein the battery connector further includes a third portion and a fourth portion, the third portion being configured to engage an end of the second battery or the third portion including a third tab having at least one third positioning feature configured to engage an end of the second battery and a fourth tab having at least one fourth positioning feature to engage the end of the second battery.

8. The system of claim 7, wherein the fourth portion is narrower than the third portion, and the fourth portion is configured to decouple the second battery from the first battery when the current above the threshold current passes through the fourth portion.

9. The system of claim 8, wherein the battery connector further includes
a fifth portion and a sixth portion, the fifth portion being configured to engage an end of a third battery, and
a seventh portion and an eighth portion, the eighth portion being configured to engage an end of a fourth battery.

10. The system of claim 9, wherein
the sixth portion is narrower than the fifth portion, and the sixth portion is configured to decouple the third battery from the fourth battery when the current above the threshold current passes through the sixth portion, and
the eighth portion is narrower than the seventh portion, and the eighth portion is configured to decouple the fourth battery from the third battery when the current above the threshold current passes through the eighth portion.

11. The system of claim 10, wherein
the first portion includes a first tab having at least one first positioning feature configured to engage an end of the first battery and a second tab having at least one second positioning feature configured to engage the end of the first battery,
the third portion includes a third tab having at least one third positioning feature configured to engage an end of the second battery and a fourth tab having at least one fourth positioning feature to engage the end of the second battery,
the fifth portion includes a fifth tab having at least one fifth positioning feature configured to engage an end of the third battery and a sixth tab having at least one sixth positioning feature configured to engage the end of the third battery, and
the seventh portion includes a seventh tab having at least one seventh positioning feature configured to engage an end of the fourth battery and an eighth tab having at least one eighth positioning feature to engage the end of the fourth battery.

12. The system of any of the claims 5 to 11, wherein the battery connector further includes at least one positioning opening formed therein.

13. The system of any of the claims 5 to 12, wherein a width of the second portion is selected based on the threshold of current upon which the second portion decouples the first battery.

14. The system of any of the claims 5 to 13, wherein the first battery and the second battery are lithium-ion cell batteries.

15. The system of any of the claims 5 to 14, further comprising a controller arranged to execute the steps of the method of any of the claims 1 to 4.
